# EUROPÄISCHE PATENTSCHRIFT

(11) **EP 1 379 415 B1**
(45) Veröffentlichungstag und Bekanntmachung des Hinweises auf die Patenterteilung: **29.12.2004**
(21) Anmeldenummer: 02732561.2
(22) Anmeldetag: 05.04.2002
(51) Int. Cl.: B60S 3/04, A46B 13/00

(54) **TEXTILSTREIFENVORHANG FÜR AUTOWASCHANLAGEN**
FABRIC-STRIP CURTAIN FOR CAR WASH INSTALLATIONS
RIDEAU DE BANDES TEXTILES POUR INSTALLATIONS DE LAVAGE DE VEHICULES

(30) Priorität: 17.04.2001 DE 20106593 U
(43) Veröffentlichungstag der Anmeldung: 14.01.2004
(73) Patentinhaber: KOHLRUSS, Gregor, D-46325 Borken (DE); WIESNER, Hubert, D-46354 Südlohn (DE); Griebe, Oliver, 46414 Rhede (DE)
(72) Erfinder: KOHLRUSS, Gregor, D-46325 Borken (DE); WIESNER, Hubert, D-46354 Südlohn (DE); Griebe, Oliver, 46414 Rhede (DE)
(74) Vertreter: Behrendt, Arne, Dipl.-Ing.
(86) Internationale Anmeldenummer: PCT/EP2002/003783
(87) Internationale Veröffentlichungsnummer: WO 2002/083469

(56) Entgegenhaltungen:
- EP-A- 0 787 446
- DE-U- 29 816 045
- US-A- 5 410 770
- US-A- 5 584 090

## Beschreibung

Die Erfindung betrifft einen Textilstreifenvorhang für Autowaschanlagen, mit einer hin- und hergehenden Trägerstange, an der nebeneinander Reinigungsstreifen aus einem Reinigungstextil aufgehängt sind, die jeweils mit die Trägerstangen umschließenden Schlaufen versehen sind, die von einem den Reinigungsstreifen verlängernden Befestigungsstreifen gebildet werden.

Beispielsweise aus der DE 36 32 554 A1 ist eine bürstenlose Waschanlage für Fahrzeuge bekannt, in welcher derartige Textilstreifenvorhänge sowohl zum Waschen als auch zum Trocknen eingesetzt werden. Während das Fahrzeug durch die Waschanlage geschleppt wird, durchläuft es zunächst eine sogenannte Tuchwaschstation, in welcher eine Naßreinigung des Fahrzeugs durch Verwendung von Wasser mit Zusatz von waschaktiven Substanzen erfolgt. Die Tuchwaschstation weist eine Mehrzahl von Reinigungsstreifen aus textilem Material auf, die nebeneinander an einer Trägerstange aufgehängt sind. Die Trägerstange ist Bestandteil eines oberhalb des zu reinigenden Fahrzeugs angeordneten Gestells, welches mittels eines geeigneten Antriebs zu einer hinund hergehenden Bewegung angeregt wird. Dabei wird auf den zu reinigenden Oberflächen des Fahrzeugs mittels der Textilstreifen mechanische Reinigungsarbeit verrichtet, wobei zum Anlösen und Entfernen des anhaftenden Schmutzes Wasser und verschiedene waschaktive Substanzen entweder über die Reinigungsstreifen oder auf andere Weise aufgebracht werden. Am Ende der Reinigung durchläuft das Fahrzeug eine Trocknungsstation, welche aus einem Gebläsetrockner und einem weiteren Textilstreifenvorhang besteht. Die Reinigungsstreifen dieses zur Trocknung bestimmten Textilstreifenvorhangs bestehen aus besonders saugfähigem Material, so daß das an dem Fahrzeug nach dem Waschvorgang anhaftende Wasser in Zusammenwirkung mit dem Gebläsetrockner möglichst vollständig entfernt werden kann.

Sowohl bei den zum Waschen als auch bei den zum Trocken verwendeten Textilstreifenvorhängen sind die Reinigungsstreifen üblicherweise mittels oben angenähter Schlaufen an den Trägerstangen befestigt. Durch den Wasch- bzw. Trocknungsbetrieb sind die Reinigungsstreifen hoher mechanischer Beanspruchung ausgesetzt. Dementsprechend schnell verschleißen die Streifen und müssen regelmäßig ersetzt werden. Bei den üblichen, mit angenähten Schlaufen versehenden Reinigungsstreifen ist nachteilig, daß diese nur von der Seite her auf die Trägerstange aufgefädelt werden können. Es ist also praktisch nicht möglich, einzelne Streifen aus dem Textilstreifenvorhang auszuwechseln, ohne auch die anderen daneben angeordneten Streifen abnehmen zu müssen.

Dokument US-A-5 410 770 offenbart eine Textilstreifenvorhang gemäβ der Oberbegriff des Anspruchs 1.

Davon ausgehend liegt der vorliegenden Erfindung die Aufgabe zugrunde, einen Textilstreifenvorhang bereitzustellen, bei dem jeder einzelne Reinigungsstreifen unabhängig von den übrigen, daneben an der Trägerstange angeordneten Streifen auswechselbar ist. Die Befestigung des Reinigungsstreifens an der Trägerstange soll besonders einfach sein und gleichzeitig soll der Reinigungsstreifen mit dem zugehörigen Befestigungsstreifen mit wenig Aufwand und zu geringen Kosten herstellbar sein.

Diese Aufgabe wird ausgehend von einem Textilstreifenvorhang der eingangs genannten Art dadurch gelöst, daß der Befestigungsstreifen mit einem Ende unlösbar an dem Reinigungsstreifen befestigt ist und an seinem gegenüberliegenden freien Ende mit einem Befestigungselement zur lösbaren Festlegung an dem Befestigungsstreifen oberhalb vom Befestigungsbereich des Reinigungsstreifens versehen ist.

Anders als bei den vorbekannten Textilstreifenvorhängen weisen bei dem erfindungsgemäßen Vorhang die Reinigungsstreifen keine fest angenähten Schlaufen auf. Stattdessen ist an dem den Reinigungsstreifen nach oben verlängernden Befestigungsstreifen ein Befestigungselement vorgesehen, durch welches die Schlaufe geöffnet werden kann, so daß jeder Reinigungsstreifen einzeln unabhängig von den daneben an der Trägerstange angeordneten Streifen abgenommen bzw. angehängt werden kann. Die die Trägerstange umschließende Schlaufe wird gebildet, in dem das freie Ende des Befestigungsstreifens mittels des Befestigungselements lösbar an dem Befestigungsstreifen festgelegt wird und zwar unmittelbar oberhalb von dem Bereich, in dem der Reinigungsstreifen an dem Befestigungsstreifen befestigt ist.

Es ist vorteilhafterweise möglich, bei bereits vorhandenen Textilstreifenvorhängen die auf konventionelle Weise aufgehängten Reinigungsstreifen bei Bedarf durch erfindungsgemäß ausgebildete Streifen zu ersetzen. Hierzu wird einfach der Befestigungsstreifen, der die Trägerstange schlaufenförmig umschließt durchtrennt, so daß der verschlissene Reinigungsstreifen entfernt werden kann. Danach wird ein neuer, erfindungsgemäßer Reinigungsstreifen an der Trägerstange aufgehängt, indem der Befestigungsstreifen um die Trägerstange herum gelegt wird, wobei sich eine die Trägerstange umschließende Schlaufe bildet, welche gesichert wird, in dem das freie Ende des Befestigungsstreifens oberhalb vom Befestigungsbereich des Reinigungsstreifens mittels des Befestigungselementes am Befestigungsstreifen fixiert wird.

Eine vorteilhafte Ausgestaltung des erfindungsgemäßen Textilstreifenvorhangs ergibt sich, wenn das Befestigungselement als Quersteg ausgebildet ist, der mit den Seitenrändern des Befestigungsstreifens derart verbunden ist, daß zwischen dem Quersteg und dem Befestigungsstreifen ein enger Durchlaß für den Durchtritt des Reinigungsstreifens verbleibt. Beim Aufhängen des Reinigungsstreifen an der Trägerstange wird das untere freie Ende des Reinigungsstreifens durch den engen Durchlaß geführt, welchen der mit den Seitenrändern des Befestigungsstreifens verbundene Quersteg bildet. Auf diese Weise entsteht eine Schlaufe, welche zugezogen wird, indem der gesamte Reinigungsstreifen durch den Schlitz zwischen Quersteg und Befestigungsstreifen hindurch gezogen wird. Ein derartiges Befestigungselement ist besonders robust und zeichnet sich durch eine einfache Handhabbarkeit beim Aufhängen und Abnehmen der Reinigungsstreifen an der Trägerstange aus.

Eine besonders einfache und kostengünstige Herstellbarkeit ergibt sich bei dem erfindungsgemäßen Textilstreifenvorhang, wenn der Befestigungsstreifen und der Quersteg ebenso wie der Reinigungsstreifen aus Textilmaterial bestehen und durch Nähte miteinander verbunden sind. Es ist hierbei möglich, den Befestigungsstreifen zusammen mit dem als Quersteg ausgebildeten Befestigungselement aus einem einzigen Zuschnitt herzustellen. Die erfindungsgemäße Funktionalität wird dann durch Anbringung geeigneter Nähte erreicht. Es ist vorteilhafterweise möglich, an dem Befestigungsstreifen Reinigungsstreifen aus verschiedenen Materialien, je nach Verwendungszweck, anzubringen. In Frage kommen saugfähige Vliese, fellartige Materialien, Schaumstoff, Leder und Kunstleder.

Zweckmäßigerweise kann der Befestigungsstreifen aus einem steifen Textilmaterial bestehen und oberhalb vom Befestigungsbereich des Reinigungsstreifens im Festlegungsbereich des Quersteges mit seitlichen Rastkehlen versehen sein, in die der Quersteg in der Festlegungsstellung einrastbar ist. Auf diese Weise ergibt sich ein fest vorbestimmter Umfang der die Trägerstange umschließenden Schlaufe, was vorteilhafterweise dazu führt, daß sämtliche nebeneinander aufgehängten Reinigungsstreifen die gleiche Länge haben. Durch Verwendung eines steifen Textilmaterials für den Befestigungsstreifen ist zusammen mit dem Einrasten des Quersteges in die seitlichen Rastkehlen des Befestigungsstreifens sichergestellt, daß die Reinigungsstreifen sicher an der Trägerstange fixiert sind und sich nicht von selbst während des Betriebes der Autowaschanlage lösen können.

Im Hinblick auf eine einfache und kostengünstige Herstellbarkeit ist es vorteilhaft, wenn der Befestigungsstreifen und der Quersteg aus einem zusammenhängendem Textilzuschnitt bestehen, wobei der Quersteg von einem nach innen umgefalteten Rand des Textilzuschnitts gebildet wird, der durch einen querverlaufenden, sich über einen Teil der Breite des Zuschnittes erstreckenden Schlitz teilweise von diesem getrennt ist. Es wird somit lediglich ein einziger Textilzuschnitt für den Befestigungsstreifen samt dem daran angebrachten Befestigungselement benötigt. Der sich über einen Teil der Breite des Zuschnitts erstreckende Schlitz bildet den Durchlaß für den Durchtritt des Reinigungsstreifens, wodurch gemäß der Erfindung einen lösbare Schlaufe um die Trägerstange gebildet wird.

Es ist zweckmäßig, den Textilzuschnitt mit Markierungen für das Annähen des Reinigungsstreifens zu versehen. Es steht damit ein universell verwendbarer Befestigungsstreifen zu Verfügung, welcher für Textilstreifenvorhänge mit Trägerstangen unterschiedlicher Dicke und Reinigungsstreifen unterschiedlicher Längen einsetzbar ist.

Ausführungsbeispiele der Erfindung werden im folgenden anhand der Figuren erläutert. Es zeigen:
- Fig. 1: Seitenansicht eines Textilstreifenvorhangs gemäß der Erfindung;
- Fig. 2: perspektivische Ansicht eines Reinigungsstreifens mit erfindungsgemäßen Befestigungselement;
- Fig. 3: Textilzuschnitt für einen Befestigungsstreifen;
- Fig. 4: vernähter Textilzuschnitt gemäß Fig. 3 mit Durchlaßöffnung für den Reinigungsstreifen.

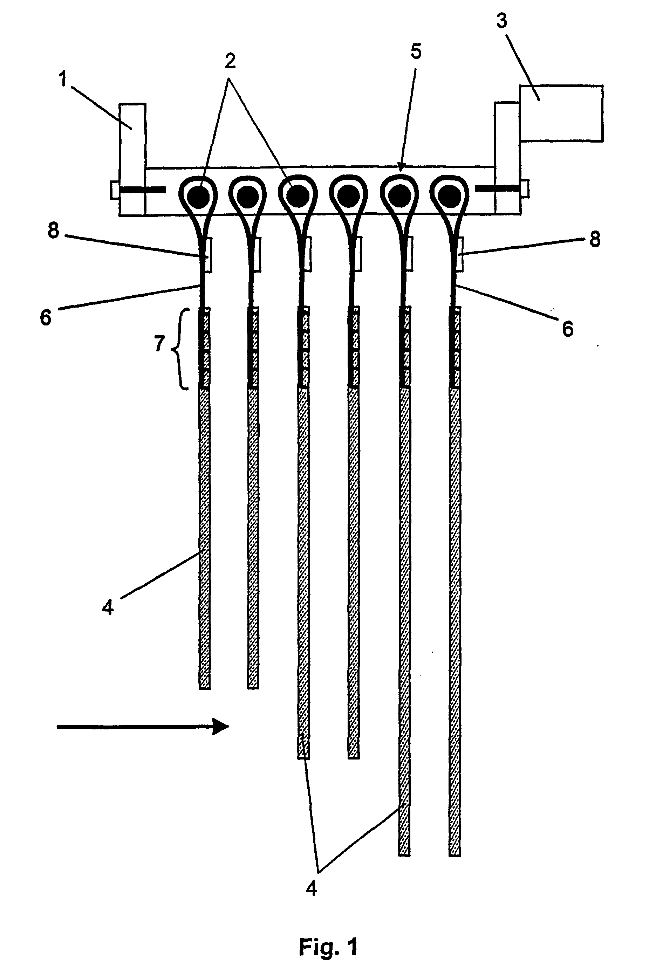

Die Figur 1 zeigt einen Textilstreifenvorhang für Autowaschanlagen gemäß der Erfindung. Durch den Pfeil ist die Richtung angedeutet, in der Fahrzeuge durch die Autowaschanlage hindurch geschleppt werden. Oberhalb der zu waschenden Fahrzeuge ist ein Gestell 1 angeordnet, an dem eine Mehrzahl von quer zur Schlepprichtung verlaufenden Trägerstangen 2 befestigt sind. Mittels eines Antriebs 3 wird das Gestell 1 und damit die Trägerstangen 2 zu einer hin- und hergehenden Bewegung angeregt. An jeder Trägerstange 2 ist eine Mehrzahl von Reinigungsstreifen 4 nebeneinander aufgehängt. Hierzu dienen am oberen Ende des Reinigungsstreifens angebrachte Schlaufen 5, die die Trägerstangen 2 jeweils umschließen. Die Schlaufen werden von Befestigungsstreifen 6 gebildet, die die Reinigungsstreifen 4 nach oben verlängern. Hierzu sind die Reinigungsstreifen 6 in einem Befestigungsbereich 7 unlösbar mit dem Reinigungsstreifen 4 vernäht. Jeder Befestigungsstreifen 6 weist ein Befestigungselement 8 auf, mit dem das freie Ende des Befestigungsstreifens 6 lösbar oberhalb vom Befestigungsbereich 7 des Reinigungsstreifens 4 befestigt wird. Hierdurch entstehen die Schlaufen 5, welche die Trägerstangen 2 umschließen und welche jederzeit aufgrund der lösbaren Befestigung geöffnet werden können, um einzelne Reinigungsstreifen abnehmen und auswechseln zu können.

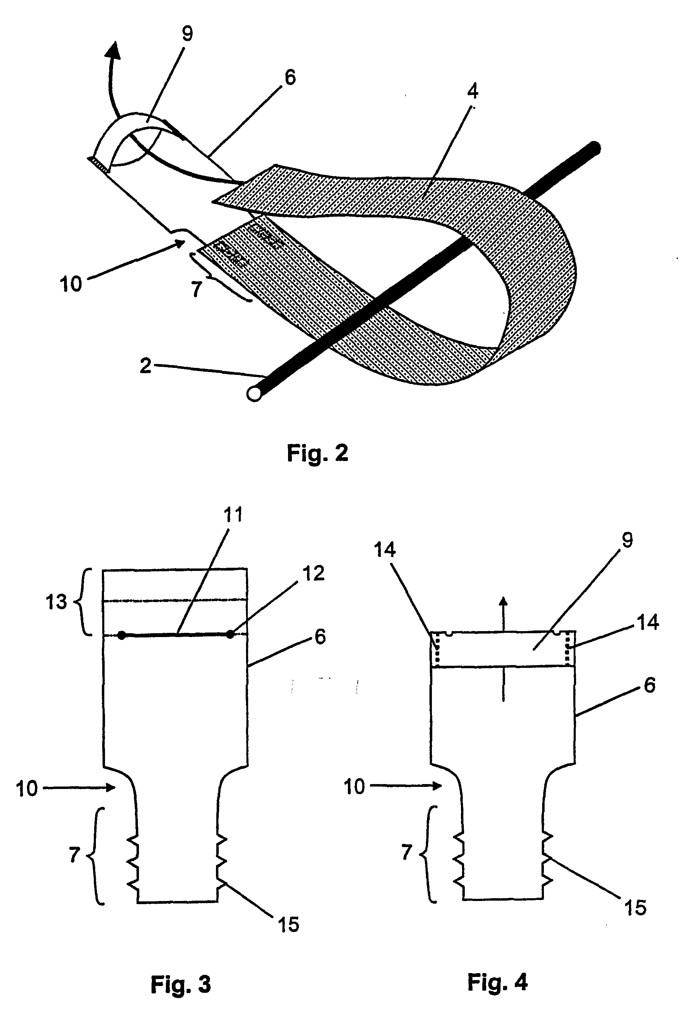

Der in der Figur 2 gezeigte Reinigungsstreifen 4 ist im Befestigungsbereich 7 unlösbar mit dem Befestigungsstreifen 6 vernäht. Am freien Ende des Befestigungsstreifens 6 ist das als Quersteg 9 ausgebildete Befestigungselement angeordnet. Der Quersteg 9 ist mit den Seitenrändern des Befestigungsstreifens 6 vernäht, so daß zwischen dem Quersteg 9 und dem Befestigungsstreifen 6 ein Durchlaß für den Durchtritt des Reinigungsstreifens 4 verbleibt. Zur Anbringung des Reinigungsstreifens 4 an einer Trägerstange 2 wird der Reinigungsstreifen 4 um diese herum gelegt und das freie Ende des Reinigungsstreifens 4 wird dann durch den Schlitz zwischen Befestigungsstreifen 6 und Quersteg 9 hindurch geführt. Die so entstehende Schlaufe wird durch weiteres Ziehen am freien Ende des Reinigungsstreifens 4 zugezogen, worauf schließlich der Quersteg 9 mit seinem Befestigungsbereich am Befestigungsstreifen 6 in Rastkehlen 10 einrastet. Hierdurch wird die Festlegungsstellung des Reinigungsstreifens 4 an der Trägerstange 2 definiert.

Die Figur 3 zeigt einen Textilzuschnitt für einen erfindungsgemäßen Befestigungsstreifen 6. Im oberen Bereich des Zuschnitts ist ein querverlaufender Schlitz 11 angeordnet, welcher seitlich in kreisförmig ausgestanzten Löchern 12 endet, durch die ein Schutz gegen seitliches Einreißen gewährleistet wird. Der oberhalb des Schlitzes 11 befindliche obere Rand 13 des Befestigungsstreifens 6 wird zweimal nach unten umgefaltet, so daß dieser den als Befestigungselement dienenden Querstegs 9 (vgl. Fig. 2) bildet. An den Seitenrändern des umgeklappten Randes werden zwei Nähte 14 angebracht, durch welche, wie in Figur 4 gezeigt, der Quersteg 9 mit dem Befestigungsstreifen 6 verbunden wird. Zwischen dem Befestigungsstreifen und dem Quersteg 9 entsteht ein enger Durchlaß, durch den, wie durch den Pfeil angedeutet, der Reinigungsstreifen 4 hindurch gezogen wird. Im Befestigungsbereich 7 des Reinigungsstreifens weist der in den Figuren 3 und 4 dargestellte Textilzuschnitt Markierungen 15 für das Annähen des Reinigungsstreifens in verschiedenen Stellungen auf.

## Patentansprüche

1. Textilstreifenvorhang für Autowaschanlagen, mit einer hin- und hergehenden Trägerstange (2), an der nebeneinander Reinigungsstreifen (4) aus einem Reinigungstextil aufgehängt sind, die jeweils mit die Trägerstangen (2) umschließenden Schlaufen (5) versehen sind, **dadurch gekennzeichnet, daß** die Schlaufen von einem den Reinigungsstreifen (4) nach oben verlängernden Befestigungsstreifen (6) gebildet werden, welcher mit einem Ende unlösbar an dem Reinigungsstreifen (4) befestigt ist und an seinem gegenüberliegenden freien Ende mit einem Befestigungselement (8) zur lösbaren Festlegung an dem Befestigungsstreifen (6) oberhalb vom Befestigungsbereich (7) des Reinigungsstreifens (4) versehen ist, wobei das Befestigungselement (8) als Quersteg (9) ausgebildet ist, welcher mit den Seitenrändern des Befestigungsstreifens (6) derart verbunden ist, daß zwischen dem Quersteg (6) und dem Befestigungsstreifen (6) ein enger Durchlaß für den Durchtritt des Reinigungsstreifens (4) verbleibt.

2. Textilstreifenvorhang nach Anspruch 1, **dadurch gekennzeichnet, daß** der Befestigungsstreifen (6) und der Quersteg (9) ebenso wie der Reinigungsstreifen (4) aus Textilmaterial bestehen und durch Nähte miteinander verbunden sind.

3. Textilstreifenvorhang nach den Ansprüchen 1 oder 2, **dadurch gekennzeichnet, daß** der Befestigungsstreifen (6) aus einem steifen Textilmaterial besteht und oberhalb vom Befestigungsbereich (7) des Reinigungsstreifens (4) im Festlegungsbereich des Quersteges (9) mit seitlichen Rastkehlen (10) versehen ist, in die der Quersteg (9) in der Festlegungsstellung einrastbar ist.

4. Textilstreifenvorhang nach den Ansprüchen 1 bis 3, **dadurch gekennzeichnet, daß** der Befestigungsstreifen (6) und der Quersteg (9) aus einem zusammenhängenden Textilzuschnitt bestehen, wobei der Quersteg (9) von einem nach innen umgefalteten Rand (13) des Textilzuschnittes gebildet wird, der durch einen querverlaufenden, sich über einen Teil der Breite des Zuschnittes erstreckenden Schlitz (11) teilweise von diesem getrennt ist.

5. Textilstreifenvorhang nach Anspruch 4, **dadurch gekennzeichnet, daß** der Textilzuschnitt mit Markierungen (15) für das Annähen des Reinigungsstreifens (4) versehen ist.

## Claims

1. A textile strip curtain for car washing installations comprising a reciprocating carrier bar (2) on which cleaning strips (4) of a cleaning textile are suspended in mutually juxtaposed relationship, which strips are each provided with loops (5) embracing the carrier bars (2), **characterised in that** the loops are formed by a fixing strip (6) which prolongs the cleaning strip (4) upwardly and which is fixed with one end non-releasably to the cleaning strip (4) and at its opposite free end is provided with a fixing element (8) for releasable securing to the fixing strip (6) above the fixing region (7) of the cleaning strip (4), wherein the fixing element (8) is in the form of a transverse limb (9) connected to the side edges of the fixing strip (6) in such a way that a narrow passage for the cleaning strip (4) to pass therethrough remains between the transverse limb (9) and the fixing strip (6).

2. A textile strip curtain according to claim 1 **characterised in that** the fixing strip (6) and the transverse limb (9) comprise textile material like the cleaning strip (4) and are connected together by seams.

3. A textile strip curtain according to claim 1 or claim 2 **characterised in that** the fixing strip (6) comprises a stiff textile material and is provided above the fixing region (7) of the cleaning strip (4) in the securing region of the transverse limb (9) with lateral latching recesses (10) into which the transverse limb (9) is latchable in the securing position.

4. A textile strip curtain according to claims 1 to 3 **characterised in that** the fixing strip (6) and the transverse limb (9) comprise a continuous textile blank portion, wherein the transverse limb (9) is formed by an inwardly folded-over edge (13) of the textile blank portion, which is partially separated therefrom by a transversely extending slot (11) extending over a part of the width of the blank portion.

5. A textile strip curtain according to claim 4 **characterised in that** the textile blank portion is provided with markings (15) for sewing on the cleaning strip (4).

## Revendications

1. Rideau de bandes textiles pour des installations de lavage de véhicules, avec une tige de support (2) effectuant un mouvement alternatif, à laquelle sont accrochées les unes à coté des autres des bandes de nettoyage (4) en un textile de nettoyage, qui sont pourvues chacune de boucles (5) entourant les tiges de support (2), **caractérisé en ce que** les boucles sont formées par une bande de fixation (6) prolongeant la bande de nettoyage (4) vers le haut, qui est fixée avec une extrémité de manière non relâchable à la bande de nettoyage (4) et qui est pourvue à son extrémité libre opposée d'un élément de fixation (8) pour la fixation relachable à la bande de fixation (6) au-dessus de la zone de fixation (7) de la bande de nettoyage (4), où l'élément de fixation (8) est réalisé comme baguette transversale (9) qui est reliée aux bords latéraux de la bande de fixation (6) de façon qu'il subsiste entre la baguette transversale (9) et la bande de fixation (6) un espace étroit pour le passage de la bande de nettoyage (4).

2. Rideau de bandes textiles selon la revendication 1, **caractérisé en ce que** la bande de fixation (6) et la baguette transversale (9), tout comme la bande de nettoyage (4), sont réalisées en matériau textile et sont reliées entre elles par des coutures.

3. Rideau de bandes textiles selon les revendications 1 ou 2, **caractérisé en ce que** la bande de fixation (6) est constituée d'un matériau textile rigide et est pourvue au-dessus de la zone de fixation (7) de la bande de nettoyage (4), dans la zone de fixation de la baguette transversale (9) de gorges d'encliquetage latérales (10) dans lesquelles peut s'encliqueter la baguette transversale (9) dans la position de fixation.

4. Rideau de bandes textiles selon les revendications 1 à 3, **caractérisé en ce que** la bande de fixation (6) et la baguette transversale (9) sont constituées d'une pièce découpée de textile communicante, où la baguette transversale (9) est formée par un bord (13) replié vers l'intérieur de la pièce découpée de textile, qui est séparé par une fente (11) s'étendant transversalement, s'étendant sur une partie de la largeur de la pièce découpée, partiellement de celle-ci.

5. Rideau de bandes textiles selon la revendication 4, **caractérisé en ce que** la pièce découpée de textile est pourvue de marquages (15) pour la couture de la bande de nettoyage (4).
